# EUROPÄISCHE PATENTANMELDUNG

(11) **EP 1 487 077 A2**
(43) Veröffentlichungstag der Anmeldung: **15.12.2004**
(21) Anmeldenummer: 03023118.7
(22) Anmeldetag: 10.10.2003
(51) Int. Cl.: H02H 3/087, H02H 7/26

(54) **Selbstlernende elektronische Sicherung**

(30) Priorität: 10.06.2003 DE 10326428
(71) Anmelder: SIEMENS AKTIENGESELLSCHAFT, 80333 München (DE)
(72) Erfinder: Möhler, Harald, 90409 Nürnberg (DE)

(57) **Zusammenfassung**

Die Erfindung betrifft eine elektronische Sicherung, die im Falle einer unzulässigen Abweichung eines zu überwachenden Parameters von einer Referenz auslöst. Diese Referenz wird von der elektronischen Sicherung im Rahmen eines Selbstlernvorganges ermittelt.

## Beschreibung

Die Erfindung betrifft eine selbstlernende elektronische Sicherung.

Von elektrischen Verbrauchern kann eine Störung in die elektrische Versorgungseinrichtung, beispielsweise eine Stromversorgung, rückwirken. So kann ein Kurzschlussfall oder ein kurzschlussähnlicher Überstrom, wie er beispielsweise beim Anlauf von Motoren durch den hohen Strombedarf entsteht, im Verbraucherzweig ein Abschalten der Versorgungseinrichtung initiieren.

An eine elektrische Versorgungseinrichtung werden im allgemeinen Verbraucherabzweige mit unterschiedlichem Strombedarf angeschlossen. Diese Verbraucherabzweige werden üblicherweise mit Leitungsschutzschaltern bzw. Sicherungsautomaten mit bestimmten Auslösecharakteristiken ausgestattet. Dadurch wird sichergestellt, dass ein überlasteter Zweig abgeschaltet wird und dass die restlichen Zweige hiervon unbeeinflusst weiterlaufen können.

Ein Kurzschlussschutz von getakteten Stromversorgungen wird im allgemeinen elektronisch realisiert. Es hat sich gezeigt, dass ein elektronischer Kurzschlussschutz in einem Fehlerfall, also beim Vorliegen eines Kurzschlusses oder eines kurzschlussähnlichen Überstroms, so schnell eingreift, dass vorgeschaltete Schutzelemente wie Leitungsschutzschalter oder Sicherungsautomaten nicht mehr auslösen. Dies hat zur Folge, dass der fehlerbehaftete Zweig nicht mehr identifiziert werden kann und der gesamte Anlagenteil einschließlich der fehlerfreien Teile abgeschaltet wird.

Die am Markt befindlichen Leitungsschutzschalter oder Sicherungsautomaten können nicht sicher auslösen.

Elektronische Sicherungen lösen sicher aus und können mit ihrer Funktion die Leitungsschutzschalter oder Sicherungsautoamten ersetzen. Die am Markt befindlichen Lösungen arbeiten nach dem Prinzip, dass eine fest vorgegebene Abschaltcharakteristik bzw. Abschaltkurve auf das zu überwachende Stromniveau mittels eines Stellgliedes, beispielsweise eines Potentiometers, eingestellt wird.

Die Aufgabe der Erfindung besteht darin, die Funktion einer elektronischen Sicherung zu verbessern.

Diese Aufgabe wird durch eine elektronische Sicherung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, dass keine manuelle Einstellung der Referenz vorgenommen werden muss. Dadurch wird sichergestellt, dass die exakt schaltende Elektronik nicht durch eine unpräzise manuelle Einstellung der Referenz in unerwünschter Weise beeinflusst wird. Durch die beanspruchte Ermittlung der Referenz im Rahmen eines Selbstlernvorganges ist sichergestellt, dass die elektronische Sicherung die von ihr erwartete Funktion erfüllt.

Eine elektronische Sicherung gemäß der Erfindung, die im Falle einer unzulässigen Abweichung eines zu überwachenden Parameters von einer Referenz auslöst, ermittelt die Referenz im Rahmen eines Selbstlernvorgangs. Dazu werden vorliegende Messwerte, beispielsweise gemessene Strom- oder Spannungswerte, digitalisiert. Innerhalb eines bestimmten, einstellbaren Zeitfensters protokolliert die selbstlernende elektronische Sicherung den Kurvenverlauf oder Eckwerte des zu überwachenden Parameters, beispielsweise der zu überwachenden elektrischen Spannung. Eine Auslösung des Messvorganges erfolgt durch einen externen oder internen Triggerimpuls oder manuell durch Eingabe eines Bedienbefehls vor Ort. Die Speicherung der erhaltenen Messwerte kann in einem internen Festspeicher, auf mobilen Speichermedien, einem Memory Stick, Speicherkarten oder Chipkarten erfolgen.

Die Größe des Zeitfensters und/oder die Granularität der Aufzeichnung sind einstellbar. In einem Analysevorgang werden die entsprechend dem Überwachungsmodus zu überwachenden Messwerte erfasst, daraus eine Referenz ermittelt und diese abgespeichert. Die Messreihe und ggf. die Überwachungsmodi können in andere selbstlernende elektronische Sicherungen mit mobilem Speicher oder unter Verwendung eines Kommunikationssystems übertragen werden. Das Kommunikationssystem kann folgende Schnittstellen aufweisen: eine Schnittstelle zu einem Bussystem, eine Schnittstelle zum Internet, eine GSM-Schnittstelle, eine UMTS-Schnittstelle, eine USB-Schnittstelle oder eine Funkschnittstelle.

Die elektronische Sicherung mit dem erfindungsgemäßen Selbstlernmodus kann auf verschiedene Überwachungsmodi eingestellt werden. Ein Überwachungsmodus ist der Spannungsüberwachungsmodus. Ein weiterer Überwachungsmodus ist der Stromüberwachungsmodus. Ein dritter Überwachungsmodus ist der Leistungsüberwachungsmodus. Ein vierter Überwachungsmodus ist ein Umweltparameterüberwachungsmodus.

Im Spannungsüberwachungsmodus ist der zu überwachende Parameter die elektrische Spannung. Dabei kann deren Kurvenverlauf, deren Minimal- und/oder Maximalwert oder auch deren differentielles Verhalten dU/dt herangezogen werden. Bezüglich des Kurvenverlaufs kann eine Hüllkurve mit einem Sicherheits-/Toleranzabstand festgelegt werden. Zu allen vorgenannten Werten können Sicherheits- bzw. Toleranzabstände vorgegeben werden. Die Werte werden vorzugsweise als normierte Faktoren festgelegt.

Im Stromüberwachungsmodus ist der zu überwachende Parameter der elektrische Strom. Dabei kann dessen Kurvenverlauf, dessen Minimal- und/oder Maximalwert oder auch dessen differentielles Verhalten dI/dt herangezogen werden. Bezüglich des Kurvenverlaufs kann eine Hüllkurve mit einem Sicherheits-/Toleranzabstand festgelegt werden. Auch hier können zu allen vorgenannten Werten Sicherheits- bzw. Toleranzabstände vorgegeben werden. Die Werte werden vorzugsweise als normierte Faktoren festgelegt.

Im Leistungsüberwachungsmodus ist der zu überwachende Parameter die elektrische Leistung. Dabei kann deren Kurvenverlauf, deren Minimal- und/oder Maximalwert oder auch deren differentielles Verhalten dP/dt herangezogen werden. Bezüglich des Kurvenverlaufs kann eine Hüllkurve mit einem Sicherheits-/Toleranzabstand festgelegt werden. Zu allen vorgenannten Werten können Sicherheits- bzw. Toleranzabstände vorgegeben werden. Die Werte werden vorzugsweise als normierte Faktoren festgelegt.

Im Umweltparameterüberwachungsmodus sind die zu überwachenden Parameter beispielsweise auf die jeweilige Stromversorgung wirkende mechanische Kräfte als Folge von Rütteln und Schütteln. Weitere zu überwachende Parameter in diesem Modus können auch die die Stromversorgung umgebende Temperatur und/oder die Luftfeuchtigkeit sein. Zu allen diesen Umweltparametern können Sicherheits-/Toleranzabstände vorgegeben werden. Die Werte werden vorzugsweise als normierte Faktoren festgelegt.

Eine erfindungsgemäße elektronische Sicherung kann als Standalonegerät ausgeführt sein. Alternativ dazu kann sie auch in einer elektrischen Einrichtung, beispielsweise einer Stromversorgung, integriert sein. Eine weitere Alternative besteht darin, die elektronische Sicherung in Form eines Moduls zu realisieren, das an ein bestehendes Gerät, beispielsweise eine Stromversorgung, andockbar ist.

Eine elektronische Sicherung gemäß der Erfindung kann auch kommunikationsfähig sein und zu diesem Zweck eine Kommunikationsschnittstelle aufweisen. Bei dieser kann es sich um eine Schnittstelle zum Anschluss an ein Bussystem, eine Schnittstelle zum Internet, eine GSM-Schnittstelle, eine UMTS-Schnittstelle, eine USB-Schnittstelle oder eine Funkschnittstelle handeln.

Eine elektronische Sicherung gemäß der Erfindung kann vor Ort oder aus der Ferne bedient werden. Sie kann auch vor Ort oder aus der Ferne ausgelesen werden. Aus der Ferne kann beispielsweise auch eine Messparametereinstellung erfolgen. Eine von einer Auswerteelektronik der elektronischen Sicherung initiierte Abschaltsequenz lässt den Strompfad des betroffenen Verbraucherstranges hochohmig werden und sperrt damit diesen Pfad sicher.

Eine elektronische Sicherung gemäß der Erfindung kann einkanalig oder mehrkanalig ausgebildet sein. Ist sie mehrkanalig ausgebildet, dann arbeiten die Detektoreinheit, die Aufzeichnungs- bzw. Speichereinheit und die Auswerteelektronik jeweils im Multiplexbetrieb.

Die wesentlichen Vorteile einer selbstlernenden elektronischen Sicherung gemäß der Erfindung liegen darin, dass die bei bekannten elektronischen Sicherungen verwendete ungenaue manuelle Einstellung der Referenz nicht notwendig ist. Eine Sicherung gemäß der Erfindung optimiert sich automatisch und exakt auf den jeweils vorliegenden Anwendungsfall. Das dadurch im Vergleich zum Stand der Technik erhaltene genauere Überwachungs- und Abschaltverhalten senkt die Servicekosten im Feld. Die Zuverlässigkeit der jeweiligen Anlage ist erhöht. Die Ausfallkosten werden gesenkt. Fehler und Betriebszustände können problemlos und zeitnah mit geringem Aufwand abgefragt und analysiert werden.

Nachfolgend werden anhand der Zeichnungen beispielhaft verschiedene Ausführungsformen einer selbstlernenden elektronischen Sicherung gemäß der Erfindung näher erläutert. Es zeigt
- Figur 1: eine Ausführungsform, bei der die elektronische Sicherung als einkanaliges Einzelgerät realisiert ist,
- Figur 2: eine Ausführungsform, bei der zwei als einkanalige Einzelgeräte realisierte elektronische Sicherungen vorgesehen sind,
- Figur 3: eine Ausführungsform, bei der die elektronische Sicherung als mehrkanaliges Einzelgerät realisiert ist,
- Figur 4: eine Ausführungsform, bei der eine einkanalige elektronische Sicherung integrierter Bestandteil einer Stromversorgung ist,
- Figur 5: eine Ausführungsform, bei der eine mehrkanalige elektronische Sicherung integrierter Bestandteil einer Stromversorgung ist,
- Figur 6: ein Diagramm zur Erläuterung der Arbeitsweise einer elektronischen Sicherung gemäß der Erfindung,
- Figur 7: ein Blockschaltbild zur Erläuterung des Aufbaus einer elektronischen Sicherung gemäß einem ersten Ausführungsbeispiel,
- Figur 8: ein Blockschaltbild zur Erläuterung des Aufbaus einer elektronischen Sicherung gemäß einem zweiten Ausführungsbeispiel und
- Figur 9: ein Blockschaltbild zur Erläuterung des Aufbaus einer elektronischen Sicherung gemäß einem dritten Ausführungsbeispiel.

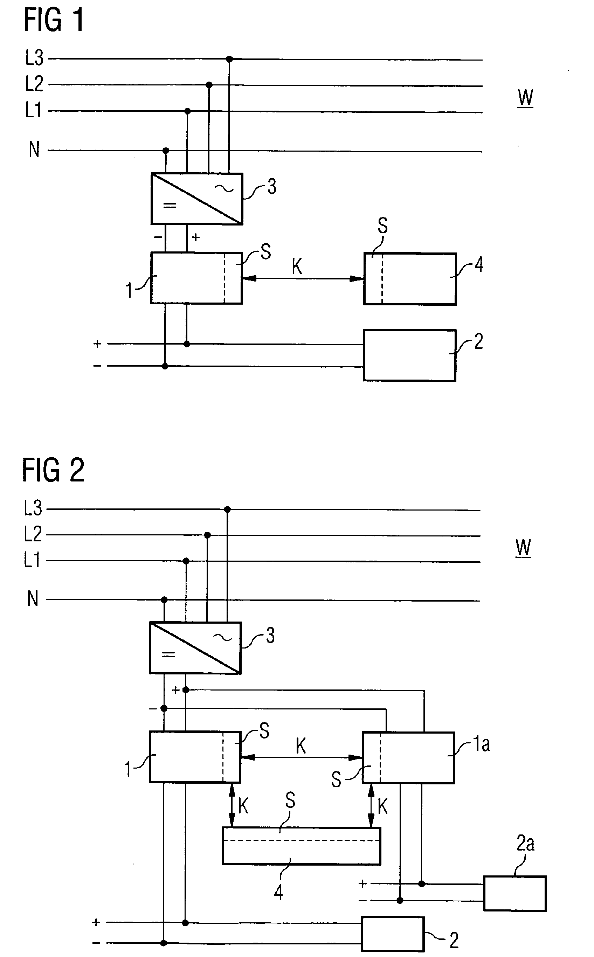

Die Figur 1 zeigt eine Ausführungsform, bei der eine selbstlernende elektronische Sicherung als einkanaliges Einzelgerät realisiert ist. Diese elektronische Sicherung 1 ist im Versorgungspfad eines Verbrauchers 2 zwischen einer Stromversorgung 3 und dem Verbraucher 2 angeordnet. Die Stromversorgung 3 ist an das Wechselstromnetz W angeschlossen. Dieses weist drei Phasenleiter L1, L2, L3 und einen Nullleiter N auf, die jeweils mit einem Eingang der Stromversorgung 3 verbunden sind. Bei der Stromversorgung 3 handelt es sich um ein Netzgerät bzw. eine Gleichrichtereinheit, die an ihrem Ausgang die vom Verbraucher 2 benötigte Versorgungsgleichspannung zur Verfügung stellt. Diese wird über eine Plusleitung + und eine Masseleitung - an die selbstlernende elektronische Sicherung 1 und von dieser aus an den Verbraucher 2 weitergegeben. Die selbstlernende elektronische Sicherung 1 ist weiterhin über einen Kommunikationskanal K mit einer Steuereinheit 4 verbunden. Diese ist unter anderem dazu vorgesehen, über den Kommunikationskanal in der Sicherung 1 gespeicherte Daten auszulesen und Befehlssignale und Daten in die Sicherung 1 zu übertragen. Zu diesem Zweck weisen die Sicherung 1 und die Steuereinheit 4 jeweils eine Kommunikationsschnittstelle S auf.

Die Sicherung 1 ist dazu vorgesehen, im Falle einer unzulässigen Abweichung eines zu überwachenden Parameters von einer Referenz auszulösen, d. h. den Versorgungspfad zum Verbraucher 2 zu unterbrechen.

Die Figur 2 zeigt eine Ausführungsform, bei der zwei als einkanalige Einzelgeräte realisierte selbstlernende elektronische Sicherungen 1 und 1a vorgesehen sind. Die Sicherung 1 ist im Versorgungspfad eines Verbrauchers 2 zwischen einer Stromversorgung 3 und dem Verbraucher 2 angeordnet. Die Sicherung 1a befindet sich im Versorgungspfad eines Verbrauchers 2a zwischen der Stromversorgung 3 und dem Verbraucher 2a. Die Stromversorgung 3 ist an das Wechselstromnetz W angeschlossen. Dieses weist drei Phasenleiter L1, L2, L3 und einen Nullleiter N auf, die jeweils mit einem Eingang der Stromversorgung 3 verbunden sind. Bei der Stromversorgung 3 handelt es sich um ein Netzgerät bzw. eine Gleichrichtereinheit, die an ihrem Ausgang die von den Verbrauchern 2 und 2a benötigte Versorgungsgleichspannung zur Verfügung stellt. Diese wird jeweils über eine Plusleitung + und eine Masseleitung - an die selbstlernenden elektronischen Sicherungen 1 und 1a und von diesen aus an die Verbraucher 2 und 2a weitergegeben. Die selbstlernenden elektronischen Sicherungen 1 und 1a sind weiterhin über jeweils einen Kommunikationskanal K mit einer Steuereinheit 4 verbunden. Diese ist unter anderem dazu vorgesehen, über den jeweiligen Kommunikationskanal K in den Sicherungen 1 und 1a gespeicherte Daten auszulesen und Befehlssignale und Daten in die Sicherungen 1 und 1a zu übertragen. Zu diesem Zweck weisen die Sicherungen 1 und 1a und auch die Steuereinheit 4 jeweils eine Kommunikationsschnittstelle S auf. Weiterhin ist auch zwischen den Sicherungen 1 und 1a ein Kommunikationskanal K vorgesehen. Über diesen können in der Sicherung 1 vorliegende Daten an die Sicherung 1a übertragen werden und umgekehrt.

Die Sicherung 1 ist dazu vorgesehen, im Falle einer unzulässigen Abweichung eines im Versorgungspfad zum Verbraucher 2 zu überwachenden Parameters auszulösen, d. h. den Versorgungspfad zum Verbraucher 2 zu unterbrechen. Die Sicherung 1a dient dazu, im Falle einer unzulässigen Abweichung eines im Versorgungspfad zum Verbraucher 2a zu überwachenden Parameters auszulösen, d. h. den Versorgungspfad zum Verbraucher 2a zu unterbrechen.

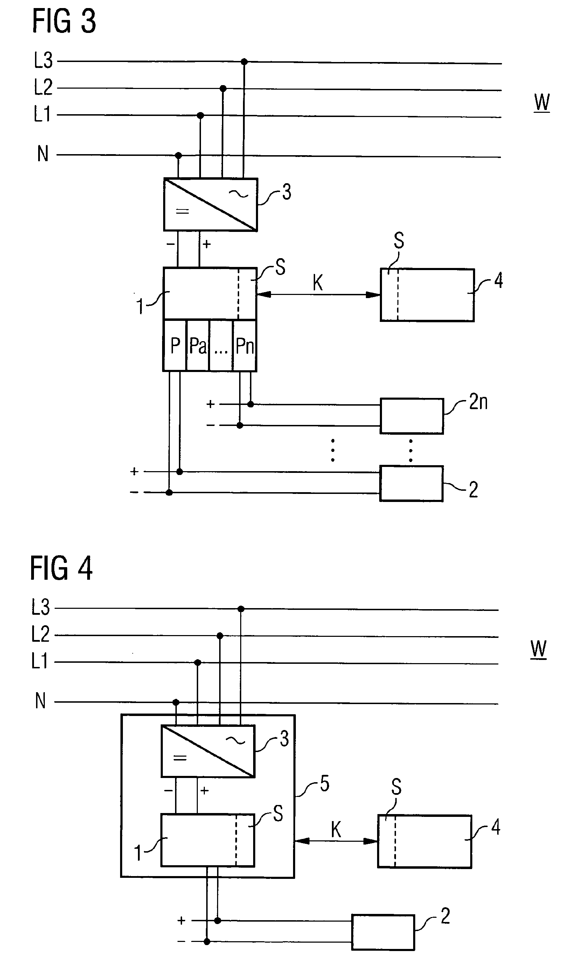

Die Figur 3 zeigt eine Ausführungsform, bei der die selbstlernende elektronische Sicherung 1 als mehrkanaliges Einzelgerät realisiert ist. Diese elektronische Sicherung 1 ist in den Versorgungspfaden P, Pa, ..., Pn von Verbrauchern 2, ..., 2n zwischen einer Stromversorgung 3 und den genannten Verbrauchern angeordnet. Die Stromversorgung ist an das Wechselstromnetz W angeschlossen. Dieses weist drei Phasenleiter L1, L2, L3 und einen Nullleiter N auf, die jeweils mit einem Eingang der Stromversorgung 3 verbunden sind. Bei der Stromversorgung 3 handelt es sich um ein Netzgerät bzw. eine Gleichrichtereinheit, die an ihrem Ausgang die von den Verbrauchern benötigte Versorgungsgleichspannung zur Verfügung stellt. Diese wird über eine Plusleitung + und eine Masseleitung - an die selbstlernende elektronische Sicherung 1 und von dieser aus an die Verbraucher 2, ..., 2n weitergegeben. Zu diesem Zweck sind innerhalb der Sicherung 1 Versorgungspfade P, ..., Pn vorgesehen. Der Versorgungspfad P ist an den Verbraucher 2 angeschlossen, der Versorgungspfad Pn an den Verbraucher 2n. Weitere Verbraucher sind in der Figur 3 aus Gründen der Übersichtlichkeit der Zeichnung nicht dargestellt.

Die selbstlernende elektronische Sicherung 1 ist weiterhin über einen Kommunikationskanal K mit einer Steuereinheit 4 verbunden. Diese ist unter anderem dazu vorgesehen, über den Kommunikationskanal K in der Sicherung 1 gespeicherte Daten auszulesen und Befehlssignale und Daten in die Sicherung 1 zu übertragen. Zu diesem Zweck weisen die Sicherung 1 und die Steuereinheit 4 jeweils eine Kommunikationsschnittstelle S auf.

Die Sicherung 1 ist dazu vorgesehen, im Falle einer unzulässigen Abweichung eines im Versorgungspfad eines der Verbraucher zu überwachenden Parameters auszulösen, d. h. den Versorgungspfad, in welchem die Störung auftritt, zu unterbrechen.

Die Figur 4 zeigt eine Ausführungsform, bei der eine selbstlernende einkanalige elektronische Sicherung 1 integrierter Bestandteil einer Stromversorgungseinheit 5 ist. Die elektronische Sicherung 1 ist im Versorgungspfad eines Verbrauchers 2 zwischen einer Stromversorgung 3 und dem Verbraucher 2 angeordnet. Die Stromversorgung 3 ist an das Wechselstromnetz W angeschlossen. Dieses weist drei Phasenleiter L1, L2, L3 und einen Nullleiter N auf, die jeweils mit einem Eingang der Stromversorgung 3 verbunden sind. Bei der Stromversorgung 3 handelt es sich um eine Gleichrichtereinheit, die an ihrem Ausgang die vom Verbraucher 2 benötigte Versorgungsspannung zur Verfügung stellt und zusammen mit der selbstlernenden elektronischen Sicherung integrierter Bestandteil der Stromversorgungseinheit 5 ist. Die von der Gleichrichtereinheit 3 bereitgestellte Versorgungsgleichspannung wird über eine Plusleitung + und eine Masseleitung - an die selbstlernende elektronische Sicherung 1 und von dieser aus an den Verbraucher 2 weitergegeben. Die selbstlernende elektronische Sicherung 1 ist weiterhin über einen Kommunikationskanal K mit einer Steuereinheit 4 verbunden. Diese ist unter anderem dazu vorgesehen, über den Kommunikationskanal K in der Sicherung 1 gespeicherte Daten auszulesen und Befehlssignale und Daten in die Sicherung 1 zu übertragen. Zu diesem Zweck weisen die Sicherung 1 und die Steuereinheit 4 jeweils eine Kommunikationsschnittstelle S auf.

Die Sicherung 1 ist dazu vorgesehen, im Falle einer unzulässigen Abweichung eines zu überwachenden Parameters von einer Referenz auszulösen, d. h. den Versorgungspfad zum Verbraucher 2 zu unterbrechen.

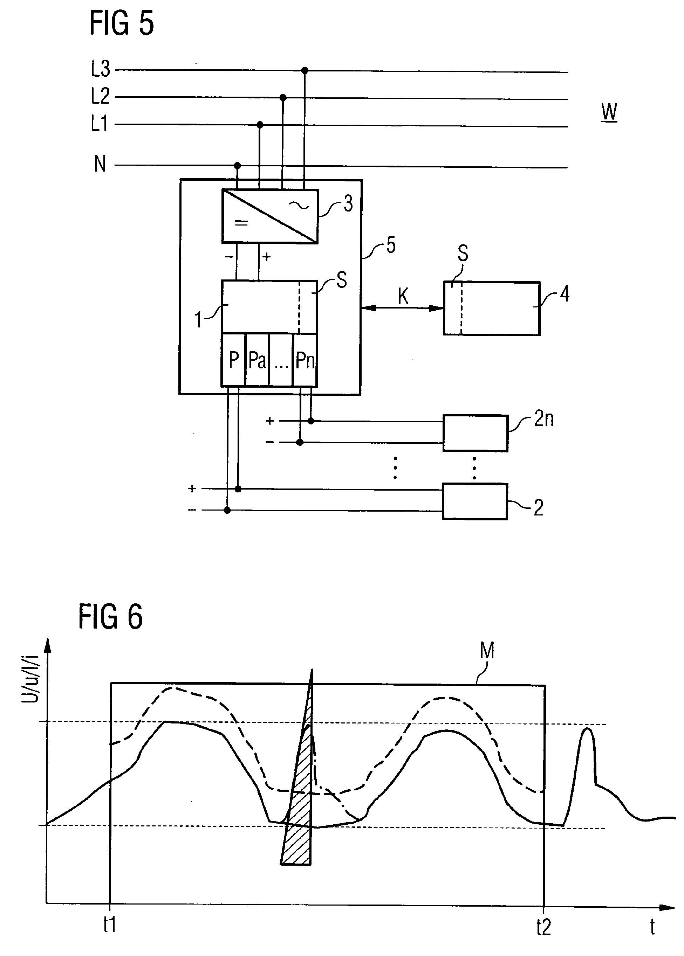

Die Figur 5 zeigt eine Ausführungsform, bei der eine mehrkanalige selbstlernende elektronische Sicherung 1 integrierter Bestandteil einer Stromversorgungseinheit 5 ist. Die Sicherung 1 ist in den Versorgungspfaden P, Pa, ..., Pn von Verbrauchern 2, ..., 2n zwischen einer Stromversorgung 3 und den genannten Verbrauchern angeordnet. Die Stromversorgung 3 ist an das Wechselstromnetz W angeschlossen. Dieses weist drei Phasenleiter L1, L2, L3 und einen Nullleiter N auf, die jeweils mit einem Eingang der Stromversorgung 3 verbunden sind. Bei der Stromversorgung 3 handelt es sich um eine Gleichrichtereinheit, die an ihrem Ausgang die von den Verbrauchern benötigte Versorgungsgleichspannung zur Verfügung stellt und zusammen mit der selbstlernenden elektronischen Sicherung 1 integrierter Bestandteil der Stromversorgungseinheit 5 ist. Die von der Gleichrichtereinheit 3 bereitgestellte Versorgungsgleichspannung wird über eine Plusleitung + und eine Masseleitung - an die selbstlernende elektronische Sicherung 1 und von dieser aus an die Verbraucher 2, ..., 2n weitergegeben. Zu diesem Zweck sind innerhalb der Sicherung 1 Versorgungspfade P, ..., Pn vorgesehen. Der Versorgungspfad P ist an den Verbraucher 2 angeschlossen, der Versorgungspfad Pn an den Verbraucher 2n. Weitere Verbraucher sind in der Figur 5 aus Gründen der Übersichtlichkeit der Zeichnung nicht dargestellt.

Die selbstlernende elektronische Sicherung 1 ist weiterhin über einen Kommunikationskanal K mit einer Steuereinheit 4 verbunden. Diese ist unter anderem dazu vorgesehen, über den Kommunikationskanal K in der Sicherung 1 gespeicherte Daten auszulesen und Befehlssignale und Daten in die Sicherung 1 zu übertragen. Zu diesem Zweck weisen die Sicherung 1 und die Steuereinheit 4 jeweils eine Kommunikationsschnittstelle S auf.

Die Sicherung 1 ist dazu vorgesehen, im Falle einer unzulässigen Abweichung eines im Versorgungspfad eines der Verbraucher zu überwachenden Parameters auszulösen, d. h. den Versorgungspfad, in welchem die Störung auftritt, zu unterbrechen.

Die Figur 6 zeigt ein Diagramm zur Erläuterung der Arbeitsweise einer selbstlernenden elektronischen Sicherung gemäß der Erfindung.

Eine selbstlernende elektronische Sicherung ist dazu vorgesehen, im Falle einer unzulässigen Abweichung eines zu überwachenden Parameters von einer Referenz auszulösen, d. h. den Versorgungspfad des Verbrauchers, in welchem die unzulässige Abweichung auftritt, zu unterbrechen. Um eine derartige unzulässige Abweichung zu erkennen, erfolgt mittels einer Detektoreinheit zunächst eine Erfassung des zu überwachenden Parameters. Der zu überwachenden Parameter kann - wie bereits oben ausgeführt wurde - die elektrische Spannung, der Strom, die Leistung oder ein Umweltparameter sein.

Die von der Detektoreinheit erfassten Werte werden innerhalb der Sicherung einer Auswerteelektronik zugeführt, die die erfassten Werte mit einer Referenz vergleicht. Bei dieser Referenz kann es sich um Eckwerte wie einen Maximalwert und/oder einen Minimalwert oder um eine Hüllkurve handeln.

Gemäß der vorliegenden Erfindung wird die Referenz von der elektrischen Sicherung im Rahmen eines Selbstlernvorgangs ermittelt. Dieser Selbstlernvorgang erfolgt innerhalb eines Messzeitfensters M, welches vom Zeitpunkt t1 bis zum Zeitpunkt t2 reicht. Der Messvorgang wird entweder automatisch durch einen internen Triggerimpuls, einen externen Triggerimpuls von der Steuereinheit 4 oder einen manuellen Bedienbefehl in die Wege geleitet. Die Länge des Messzeitfensters M ist vorzugsweise einstellbar, wobei diese Einstellung entweder über die Steuereinheit 4 oder über einen manuellen Bedienbefehl erfolgt.

Das Messzeitfenster ist so gelegt, dass der Messvorgang innerhalb eines Zeitraums erfolgt, in welchem die Anlage, innerhalb derer sich die Stromversorgung, die Sicherung und der bzw. die Verbraucher befinden, im ungestörten Normalbetrieb arbeiten. In diesem Zeitraum können und sollen durchaus Belastungsspitzen auftreten, die im späteren Überwachungsbetrieb aber nicht zu einem Auslösen der Sicherung führen sollen.

Beispielsweise wird innerhalb des Messzeitfensters der Verlauf des zu überwachenden Parameters detektiert, wie er in der Figur 6 durch die dickgezeichnete Linie zwischen den Zeitpunkten t1 und t2 veranschaulicht ist. Die detektierten Messwerte werden der Auswerteelektronik zugeführt, die aus den detektierten Messwerten die Referenz ermittelt. Vorzugsweise geschieht dies unter Berücksichtigung eines Toleranzabstandes. Dies ist in der Figur 6 durch die dick gezeichnete gestrichelte Linie zwischen den Zeitpunkten t1 und t2 angedeutet. Dient beispielsweise der Kurvenverlauf der Spannung als Referenz, dann wird im späteren Überwachungsbetrieb eine unzulässige Abweichung des zu überwachenden Parameters "Spannung" dann erkannt, wenn die gemessene Spannung außerhalb der in der Figur 6 durch die dick gezogene und die dicke gestrichelte Linie veranschaulichten Hüllkurve liegt.

Alternativ zu einer Hüllkurve können auch der im Messzeitfenster M ermittelte Minimalwert und Maximalwert, vorzugsweise nach Berücksichtigung eines Toleranzabstandes, als Referenz verwendet werden. In diesem Fall wird im späteren Überwachungsbetrieb eine unzulässige Abweichung des zu überwachenden Parameters "Spannung" dann erkannt, wenn die gemessene Spannung entweder den ggf. mit einem Toleranzabstand beaufschlagten Maximalwert überschreitet oder den ggf. mit einem Toleranzabstand beaufschlagten Minimalwert unterschreitet.

Alternativ zur Hüllkurve oder dem Maximal- und Minimalwert kann auch das differentielle Verhalten dU/dt des zu überwachenden Parameters als Referenz verwendet werden. Dies ist in der Figur 6 durch das in der Bildmitte gezeichnete Dreieck und den strichpunktierten Signalverlauf veranschaulicht. In diesem Fall wird im Messzeitfenster von der Auswerteelektronik eine Ermittlung des differentiellen Verhaltens des zu überwachenden Parameters durchgeführt und daraus zulässige Grenzwerte abgeleitet. Werden diese dann im späteren Überwachungsbetrieb überschritten, dann wird auf das Vorliegen einer unzulässigen Abweichung von der Referenz geschlossen und das Auslösen der elektronischen Sicherung herbeigeführt.

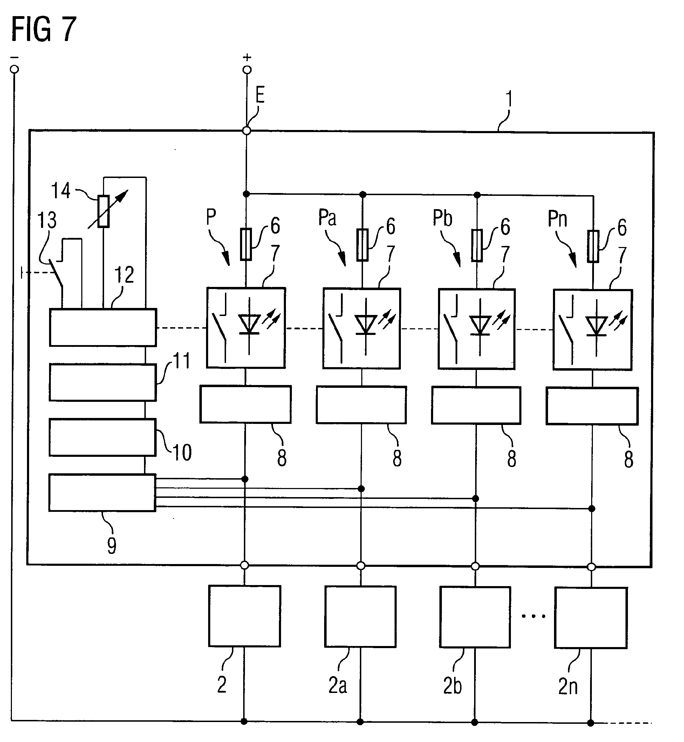

Die Figur 7 zeigt ein Blockschaltbild zur Erläuterung des Aufbaus einer elektronischen Sicherung gemäß einem ersten Ausführungsbeispiel. Die dargestellte elektronische Sicherung 1 weist einen Eingang E auf, an dem die von der Stromversorgung gelieferte positive Versorgungsgleichspannung anliegt. An diesen Eingang E ist eine Parallelschaltung von Versorgungspfaden P, Pa, Pb, ..., Pn angeschlossen. Jeder dieser Versorgungspfade weist eine Reihenschaltung auf, die eine als Leitungsschutz dienende Schmelzsicherung 6, einen elektronischen Schalter 7 und eine Detektoreinheit 8 enthält. Der Ausgang der Detektoreinheit 8 ist mit einer jeweils zugehörigen Last 2, 2a, 2b, ..., 2n verbunden. Weiterhin sind die Ausgänge der Detektoreinheiten 8 an einen Schaltungsblock 9 angelegt, der einen Analog-Digital-Wandler und einen n-fach-Speicher aufweist. Der n-fach-Speicher ist zur Abspeicherung von Messwerten vorgesehen, die mittels der Detektoreinheiten 8 erfasst werden.

Der Ausgang des Schaltungsblockes 9 ist über einen Multiplexer 10 mit einem Schaltungsblock 11 verbunden, der eine Auswertelogik und einen weiteren Speicher aufweist. Dieser weitere Speicher ist zur Abspeicherung der Referenz und der weiteren Daten vorgesehen, die zur Ermittlung der Referenz und zur Beurteilung der Abweichung eines zu überwachenden Parameters notwendig sind. Dazu gehören beispielsweise die Informationen über Toleranzabstände, die Dauer des Zeitfensters und den momentan eingestellten Überwachungsmodus.

Mittels der Auswertelogik wird im Rahmen des beschriebenen Selbstlernvorganges die Referenz ermittelt. Weiterhin dient die Auswertelogik dazu, die von den Detektoreinheiten 8 gelieferten Messdaten nach ihrer Digitalisierung mit der Referenz zu vergleichen und zu ermitteln, ob die Messdaten eine unzulässige Abweichung von der Referenz aufweisen. Ist das der Fall, dann generiert eine mit der Auswertelogik 11 verbundene Steuerlogik 12 ein Schaltsignal für den Schalter in demjenigen Versorgungspfad, in welchem die unzulässige Abweichung aufgetreten ist. Durch dieses Schaltsignal wird der genannte Schalter geöffnet und damit der Versorgungspfad unterbrochen. Die anderen Versorgungspfade, in denen keine unzulässigen Abweichungen des zu überwachenden Parameters von der Referenz vorliegen, bleiben durchlässig, so dass die daran angeschlossenen Verbraucher weiterhin stromversorgt werden.

Die in der Figur 7 dargestellte elektronische Sicherung 1 ist weiterhin mit einem Taster 13 versehen, mittels dessen der Selbstlernvorgang manuell aktivierbar ist. Weiterhin ist die in der Figur 7 gezeigte elektronische Sicherung 1 mit einem an die Steuerlogik 12 angeschlossenen einstellbaren Widerstand versehen, mittels dessen die Auslösecharakteristik des elektronischen Schalters 1 einstellbar ist.

Die in der Figur 7 dargestellte Auswerteelektronik, der die Schaltungsblöcke 9 - 12 angehören, ist vorzugsweise in Form eines Mikrocomputers realisiert, der in das Gehäuse der elektronischen Sicherung 1 eingebaut ist.

Das von der Stromversorgung gelieferte Massesignal ist mit den Masseanschlüssen der Verbraucher 2, 2a, 2b, ..., 2n verbunden.

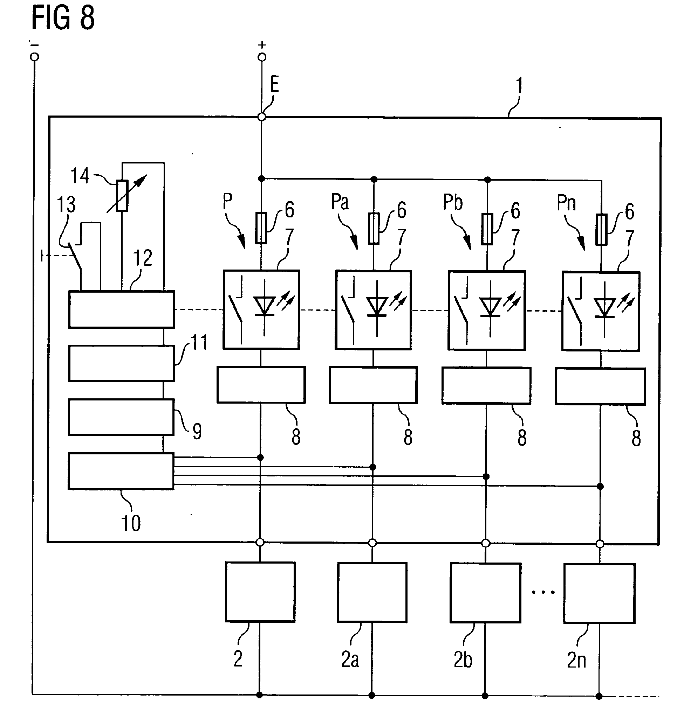

Die Figur 8 zeigt ein Blockschaltbild zur Erläuterung des Aufbaus einer elektronischen Sicherung gemäß einem zweiten Ausführungsbeispiel. Dieses stimmt mit dem ersten Ausführungsbeispiel weitgehend überein und unterscheidet sich von diesem dadurch, dass die Reihenfolge der Schaltungsblöcke 9 und 10 vertauscht ist. Folglich sind bei dem in der Figur 8 gezeigten Ausführungsbeispiel die Ausgänge der Detektoreinheiten 8 mit dem Multiplexer 10 verbunden. Dessen Ausgangssignale werden über den Analog-Digital-Wandler 9 an den Schaltungsblock 11 weitergegeben, der die Auswertelogik und den Speicher enthält, der zur Abspeicherung der Referenz und zur Beurteilung der Abweichung eines zu überwachenden Parameters notwendig sind. Bei diesem Ausführungsbeispiel ist im Schaltungsblock 9 kein Speicher notwendig.

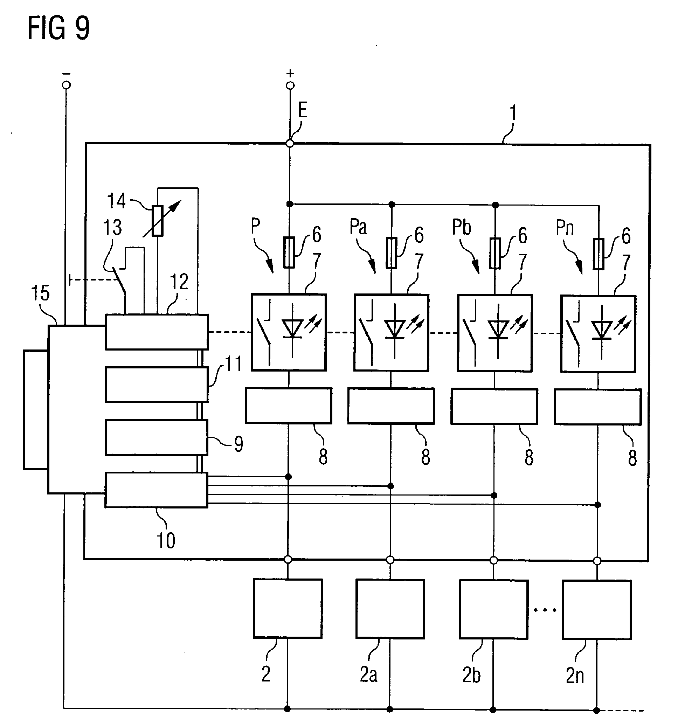

Die Figur 9 zeigt ein Blockschaltbild zur Erläuterung des Aufbaus einer elektronischen Sicherung gemäß einem dritten Ausführungsbeispiel. Dieses stimmt mit dem zweiten Ausführungsbeispiel weitgehend überein und unterscheidet sich von diesem dadurch, dass die elektronische Sicherung zusätzlich ein Lesegerät 15 aufweist. Mittels dieses Lesegerätes können unter Verwendung eines Datenträgers extern konfigurierte Daten, beispielsweise extern konfigurierte Auslösecharakteristiken, in die Auswerteelektronik übertragen werden. Diese Daten werden dann zur Ermittlung der Referenz und/oder der Prüfung, ob eine unzulässige Abweichung eines zu überwachenden Parameters von der Referenz vorliegt, verwendet.

Eine elektronische Sicherung gemäß der Erfindung kann zusätzlich zu den in den Figuren 7 - 9 gezeigten Bestandteilen eine Anzeigeeinheit enthalten, mittels welcher die Zustände der Schalteinheiten 7 und/oder weitere Informationen signalisiert werden.

Bei der in der Figur 9 gezeigten Einheit 15 muss es sich nicht um ein Lesegerät handeln, das zum Auslesen von auf einem Datenträger abgespeicherten Informationen vorgesehen ist. Die Einheit 15 kann auch eine Schnittstelle sein, über welche die elektronische Sicherung 1 mit einer externen Steuereinheit oder einer weiteren elektronischen Sicherung bidirektional und drahtlos in Verbindung steht.

## Patentansprüche

1. Elektronische Sicherung, die im Falle einer unzulässigen Abweichung eines zu überwachenden Parameters von einer Referenz auslöst, dadurch gekennzeicnet, dass sie die Referenz im Rahmen eines Selbstlernvorgangs ermittelt.

2. Elektronische Sicherung nach Anspruch 1, **dadurch gekennzeichnet, dass** sie eine Detektoreinheit (8), die innerhalb eines vorgegebenen Zeitfensters Messwerte des zu überwachenden Parameters erfasst, und eine Auswerteelektronik (9 - 12), die durch eine Auswertung der Messwerte die Referenz ermittelt, umfasst.

3. Elektronische Sicherung nach Anspruch 2, **dadurch gekennzeichnet, dass** die Auswerteelektronik die Referenz durch eine Auswertung des gemessenen Minimalund/oder Maximalwertes des Parameters ermittelt.

4. Elektronische Sicherung nach Anspruch 3, **dadurch gekennzeichnet, dass** die Auswerteelektronik die Referenz unter Berücksichtigung eines Toleranzabstandes ermittelt.

5. Elektronische Sicherung nach Anspruch 4, **dadurch gekennzeichnet, dass** die Referenz durch eine Hüllkurve definiert ist.

6. Elektronische Sicherung nach einem der Ansprüche 2 - 5, **dadurch gekennzeichnet, dass** die Dauer des Zeitfensters einstellbar ist.

7. Elektronische Sicherung nach einem der vorhergehenden Ansprüche, **dadurch gekennzeichnet, dass** sie zwischen verschiedenen Überwachungsmodi umschaltbar ist.

8. Elektronische Sicherung nach Anspruch 7, **dadurch gekennzeichnet, dass** zu den Überwachungsmodi ein Spannungsüberwachungsmodus, ein Stromüberwachungsmodus, ein Leistungsüberwachungsmodus und/oder ein Umweltparameterüberwachungsmodus gehören.

9. Elektronische Sicherung nach einem der vorhergehenden Ansprüche, **dadurch gekennzeichnet, dass** sie als Standalonegerät ausgeführt ist.

10. Elektronische Sicherung nach einem der Ansprüche 1 - 8, **dadurch gekennzeichnet, dass** sie integrierter Bestandteil einer Stromversorgungseinheit (5) ist.

11. Elektronische Sicherung nach einem der Ansprüche 1 - 8, **dadurch gekennzeichnet, dass** sie als Modul ausgebildet ist, das an ein Gerät andockbar ist.

12. Elektronische Sicherung nach einem der vorhergehenden Ansprüche, **dadurch gekennzeichnet, dass** sie eine Kommunikationsschnittstelle (K) aufweist.

13. Elektronische Sicherung nach Anspruch 12, **dadurch gekennzeichnet, dass** die Kommunikationsschnittstelle eine Busschnittstelle, eine Schnittstelle zum Anschluss an das Internet, eine GSM-Schnittstelle, eine UMTS-Schnittstelle, eine USB-Schnittstelle oder eine Funkschnittstelle ist

14. Elektronische Sicherung nach einem der vorhergehenden Ansprüche, **dadurch gekennzeichnet, dass** sie vor Ort bedienbar ist.

15. Elektronische Sicherung nach einem der vorhergehenden Ansprüche, **dadurch gekennzeichnet, dass** sie fernbedienbar ist.

16. Elektronische Sicherung nach einem der vorhergehenden Ansprüche, **dadurch gekennzeichnet , dass** sie einkanalig ausgeführt ist.

17. Elektronische Sicherung nach einem der Ansprüche 1 - 15, **dadurch gekennzeichnet, dass** sie mehrkanalig ausgeführt ist.

18. Elektronische Sicherung nach Anspruch 17, **dadurch gekennzeichnet, dass** die Auswerteelektronik (9 - 12) eine Abschaltsequenz initiiert, die den Strompfad eines Verbraucherstranges mittels elektronischen Schaltens hochohmig werden lässt.

19. Elektronische Sicherung nach einem der Ansprüche 2 - 18, **dadurch gekennzeichnet, dass** der Beginn des Zeitfensters durch einen externen Triggerimpuls oder einen Bedienbefehl festgelegt wird.

20. Elektronische Sicherung nach einem der vorhergehenden Ansprüche, **dadurch gekennzeichnet , dass** sie einen Speicher aufweist, in welchem die Messwerte und/oder die Referenz abgespeichert sind.

21. Elektronische Sicherung nach Anspruch 20, **dadurch gekennzeichnet, dass** der Speicher ein interner Festspeicher ist.

22. Elektronische Sicherung nach Anspruch 20, **dadurch gekennzeichnet, dass** der Speicher ein mobiles Speichermedium ist.

23. Elektronische Sicherung nach Anspruch 22, **dadurch gekennzeichnet, dass** der Speicher ein Memory Stick, eine Speicherkarte oder eine Chipkarte ist.
